# EUROPEAN PATENT SPECIFICATION

(11) **EP 4 063 656 B1**
(45) Date of publication and mention of the grant of the patent: **02.12.2026**
(21) Application number: 20889228.1
(22) Date of filing: 07.10.2020
(51) Int. Cl.: F04C 2/10, F04C 15/00, H02K 1/27, H02K 3/34, H02K 5/22, H02K 7/116, H02K 1/278

(54) **PUMP**
PUMPE
POMPE

(30) Priority: 21.11.2019 KR 20190150617
(43) Date of publication of application: 28.09.2022
(73) Proprietor: LG Innotek Co., Ltd., Seoul 07796 (KR)
(72) Inventor: KIM, Sang Tae, Seoul 07796 (KR)
(74) Representative: Plasseraud IP
(86) International application number: PCT/KR2020/013678
(87) International publication number: WO 2021/101064

(56) References cited:
- JP-A- 2003 129 966
- JP-A- 2003 129 966
- JP-A- 2013 234 597
- JP-B2- 5 391 016
- KR-B1- 100 910 434
- US-A1- 2012 164 009
- US-A1- 2012 164 009
- US-A1- 2015 139 831
- US-A1- 2019 249 661

## Description

### [Technical Field]

The present embodiment relates to a pump.

### [Background Art]

A pump serves to discharge the amount of flow at a constant pressure. The oil circulated by the pump can be used to operate a hydraulic system using hydraulic pressure, or for a cooling or lubricating effect.

A mechanical oil pump (MOP) is an oil pump that operates using the power of a machine such as an engine.

Recently, research on hybrid vehicles and electric vehicles has been actively conducted for the purpose of improving fuel efficiency and reducing carbon emissions.

Accordingly, the demand for an electric oil pump (EOP) operated by a motor instead of a mechanical oil pump (MOP) operated by the power of a machine such as an engine is increasing.

The EOP has a pump-integrated structure in which the housing of the pump and the housing of the motor are integrated. Such a pump-integrated structure has advantages of reduced volume and light weight, but may cause damage to the pump when assembling the motor.

The EOP may typically include a motor region and a pump region. The motor region includes a stator, a rotor, and a rotation shaft. The pump region includes an inner rotor coupled to one end of the rotation shaft to receive rotational force from the rotation shaft, and an outer rotor accommodating the inner rotor.

The document US 2019/249661 A1 provides a gerotor pump including an inner gear mounted on a first axis, an outer gear mounted on a second axis and meshing internally with the inner gear in an offset manner, and an electrical motor including a rotor and a stator having a radial gap therebetween in a radial direction. The pump also includes a spindle fixedly coupled to the outer gear to facilitate maintaining the radial gap. The spindle is rotatably coupled for rotation about the second axis. The spindle aids in maintaining a consistent radial gap during operation of the gerotor pump. The inner gear may be coupled to a drive shaft for driving the gears. The gerotor pump may be driven via an electric or mechanical driver. A pressure plate may also be positioned adjacent the gerotor gears and within the housing. The spindle and pressure plate help secure the pump parts both axially and radially.

The document US 2012/164009 A1 provides an electric pump unit that may be compactified and that may be reduced in weight and cost is provided. The electric pump unit is configured such that a pump chamber having an oil suction port and an oil discharge port is formed on an inner side of a motor stator that is fixedly provided on an inner periphery of a synthetic resin unit housing and only part of an inner peripheral side of which is exposed to an inside of the unit housing, a pump outer rotor is arranged on an inner side of the motor stator in the pump chamber so as to be able to rotate using an inner periphery of the motor stator as a guide, a pump inner rotor that is supported for rotation by the unit housing is arranged on an inner side of the pump outer rotor, and a motor rotor is formed such that a permanent magnet is held by a synthetic resin permanent magnet holding portion that is provided by integral molding on an outer periphery of the pump outer rotor.

According to the EOP having the above structure, there is a problem in that the motor part and the pump part in a single pump exist independently, thereby increasing the number of parts. In addition, there is a problem in that the overall size of the product increases as the length increases in the axial direction.

### [Detailed Description of the Invention]

### [Technical Subject]

The present invention has been proposed to improve the above problems, and it is to provide a pump capable of reducing the manufacturing cost owing to the reduction in the number of parts, and enabling the miniaturization thereof.

### [Technical Solution]

The present invention is a pump as defined in independent claim 1. Further embodiments of the invention are defined in dependent claims 2-7.

As an embodiment, a pump comprises: a housing including a body and a first partition wall which separates first and second areas; a stator disposed in the housing; a circuit board disposed in the first area; a pump gear disposed in the second area; and magnets disposed on the pump gear, wherein the second area includes a second space defined by the first partition wall and the body, and wherein the stator is inserted into the body.

The first area includes a first space, wherein the first area and the second space may not be connected by the first partition wall.

The stator includes a core, an insulator coupled to the core, and a coil wound on the insulator, wherein at least a portion of the insulator is exposed to the outside of the body.

The stator includes a core, an insulator coupled to the core, and a coil wound on the insulator, wherein the stator is molded inside the body and may not be exposed to the outside of the body.

At least a portion of the body may be disposed between the stator and the pump gear.

The magnet may be disposed on an outer peripheral surface of the pump gear to correspond to the coil.

The housing includes a terminal, wherein the terminal may be connected to the coil and the circuit board.

The first partition wall includes a first protrusion being protruded in a direction facing the pump gear, wherein the pump gear includes a first groove in which the first protrusion is disposed.

A first cover disposed above the first area and a second cover disposed below the second area are included, wherein a first opening and a second opening having a predetermined shape are formed on one surface of the second cover, wherein a third opening connected to the first opening and a fourth opening connected to the second opening are formed on the other surface of the second cover, and wherein a third groove corresponding to the shape of the first opening and a fourth groove corresponding to the shape of the second opening may be included on one surface of the first partition wall.

The pump gear includes an external gear and an internal gear disposed inside the external gear.

### [Advantageous Effects]

According to the present invention, since the rotation shaft for transmitting the rotational force of the motor region to the pump region in the pump according to the conventional structure becomes unnecessary, there is an advantage in that the number of parts is reduced, thereby lowering the manufacturing cost.

In addition, in the conventional structure in which the motor region and the pump region are partitioned in up and down directions, since the length in up and down directions is formed to be short by removing the rotation shaft, there is an advantage in that the product can be miniaturized.

In addition, since the space in which the fluid is accommodated with other regions is divided through a partition wall, there is an advantage in that the leaking of the fluid to other regions can be prevented. In particular, there is an advantage that the stator can be protected from fluid by embedding the stator inside the housing.

In addition, there is an advantage in that noise can be reduced by disposing the external and internal gears, which are the main causes of noise, in the innermost space of the housing.

### [Brief Description of Drawings]

FIG. 1 is a perspective view of a pump according to an embodiment of the present invention.
FIG. 2 is a plan view illustrating a lower surface of a pump according to an embodiment of the present invention.
FIG. 3 is an exploded perspective view of a pump according to an embodiment of the present invention.
FIG. 4 is a perspective view illustrating a coupling state of an external gear and an internal gear in a housing according to an embodiment of the present invention.
FIG. 5 is a cross-sectional view of a housing according to an embodiment of the present invention.
FIG. 6 is a perspective view of an external gear according to an embodiment of the present invention.
FIG. 7 is a perspective view illustrating a state in which a magnet is coupled to a core according to an embodiment of the present invention.
FIG. 8 is a cross-sectional view illustrating a part of FIG. 7.
FIG. 9 is a perspective view of a core according to an embodiment of the present invention.
FIG. 10 is an enlarged perspective view of a groove in which a magnet inside a core according to an embodiment of the present invention is being coupled.
FIG. 11 is a modified embodiment of a core according to an embodiment of the present invention.
FIG. 12 is a plan view illustrating an upper surface or a lower surface of an external gear according to an embodiment of the present invention.
FIG. 13 is a perspective view of a core according to a second embodiment of the present invention.
FIG. 14 is a plan view illustrating a lower surface of a groove according to a second embodiment of the present invention.
FIG. 15 is a perspective view of a second cover according to an embodiment of the present invention.
FIG. 16 is a perspective view illustrating a second cover according to an embodiment of the present invention in which a portion thereof is cut open.
FIG. 17 is a cross-sectional view illustrating a coupling state of a second cover and a pump gear according to an embodiment of the present invention.

### [BEST MODE]

Hereinafter, preferred embodiments of the present invention will be described in detail with reference to the accompanying drawings.

However, the present invention is not limited to the embodiments described above, but may be implemented in various forms within the scope defined by the claims .

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction based on one component may be included.

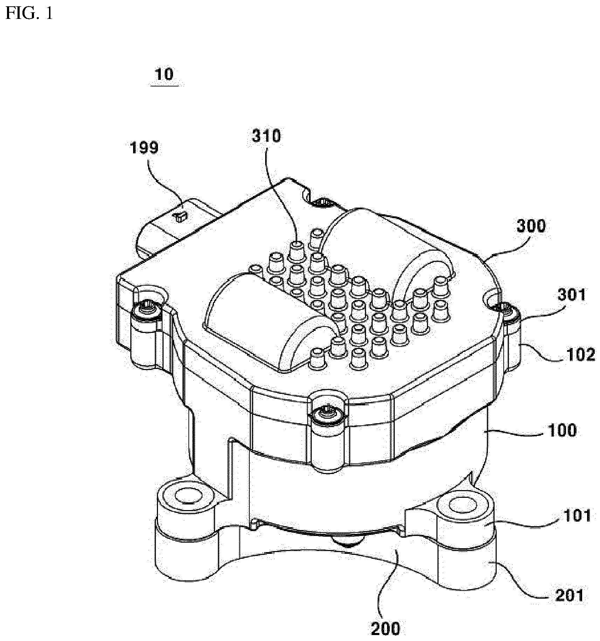

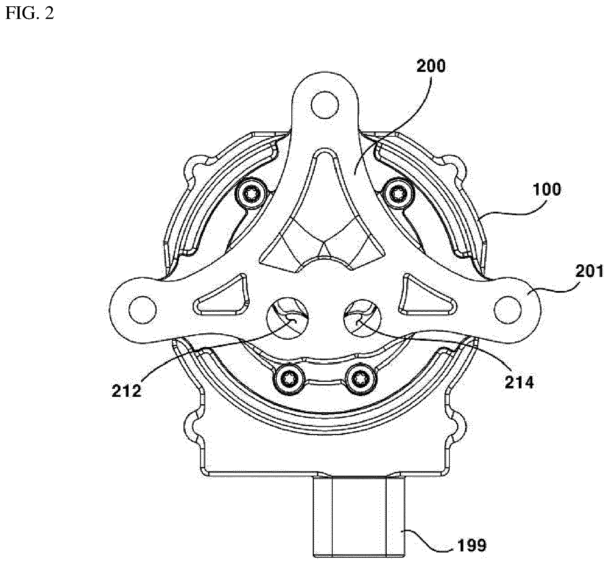

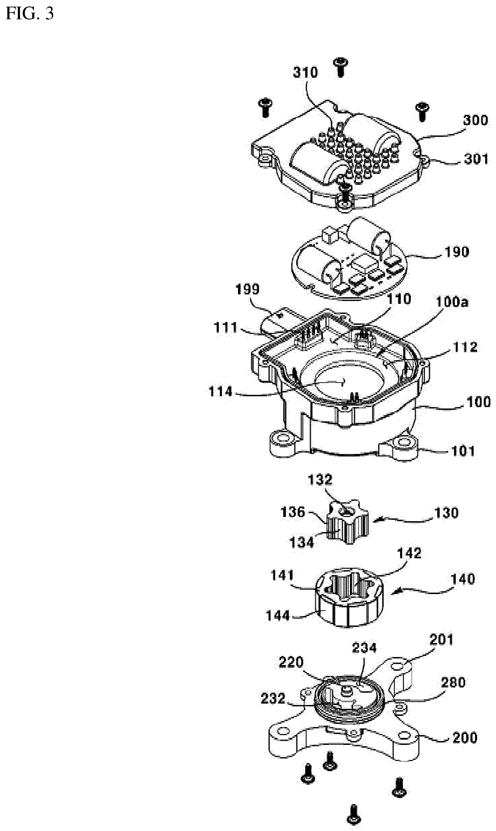

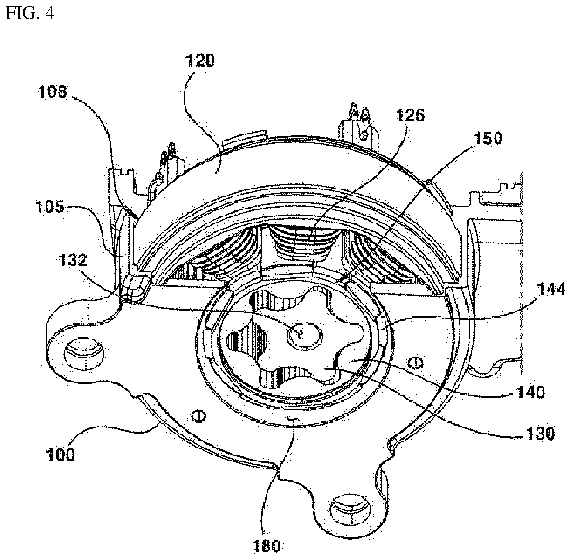

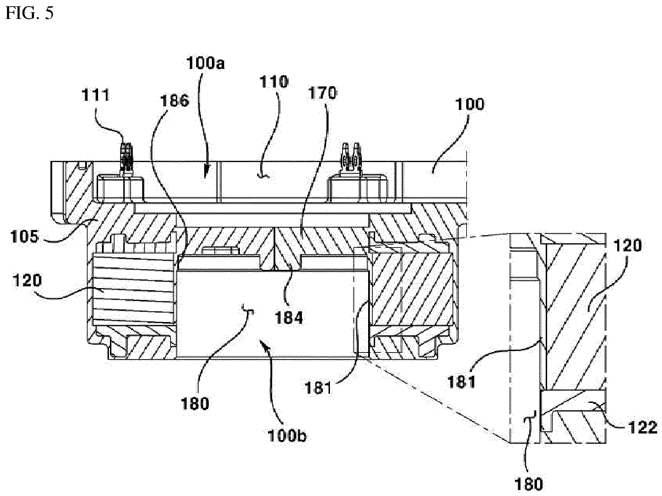

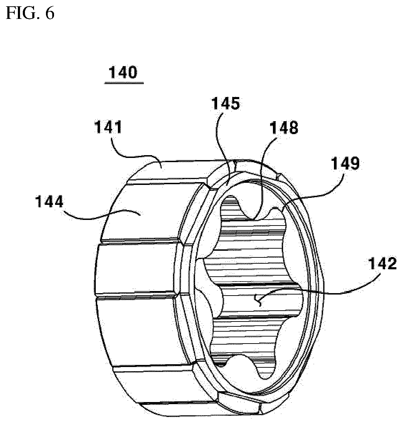

FIG. 1 is a perspective view of a pump according to an embodiment of the present invention; FIG. 2 is a plan view illustrating a lower surface of a pump according to an embodiment of the present invention; FIG. 3 is an exploded perspective view of a pump according to an embodiment of the present invention; FIG. 4 is a perspective view illustrating a coupling state of an external gear and an internal gear in a housing according to an embodiment of the present invention; FIG. 5 is a cross-sectional view of a housing according to an embodiment of the present invention; and FIG. 6 is a perspective view of an external gear according to an embodiment of the present invention.

FIG. 4 is a perspective view illustrating in which a portion of the housing is being cut out.

Referring to FIGS. 1 to 6, the pump **10** according to an embodiment of the present invention may have an external shape formed by coupling the housing **100,** the second cover **200,** and the first cover **300.**

With respect to the housing **100,** the second cover **200** may be coupled to a lower surface of the housing **100.** The first cover **300** may be coupled to an upper surface of the housing **100.** The housing **100** and the second cover **200** may include a first coupling part **101** and a second coupling part **201** to which screws are being screw-coupled, respectively. Accordingly, the housing **100** and the second cover **200** may be screw-coupled through the screws. The housing **100** and the first cover **300** may include a third coupling part **102** and a fourth coupling part **301** to which screws are screw-coupled. Accordingly, the housing **100** and the first cover **300** may be screw-coupled.

A first opening **212** through which the fluid is being sucked, and a second opening **214** through which the circulated fluid is being discharged may be formed on one surface of the second cover **200.** A third opening **232** connected to the first opening **212** and a fourth opening **234** connected to the second opening **214** may be formed on the other surface of the cover **200.**

On an upper surface of the second cover **200,** a mounting part **280** being protruded upward and being coupled to a second space **180** (refer to FIG. 4) inside the housing **100** to be described later. The cross section of the mounting part **280** may be a circular shape. A screw thread or a screw groove may be formed on an outer peripheral surface of the mounting part **280.** In addition, a screw thread or a screw groove may be formed on an inner peripheral surface of the second space **180** facing the outer peripheral surface of the mounting part **280.** Due to this, the mounting part **280** may be screw-coupled to the inner peripheral surface of the second space **180.** A cross-sectional shape of the mounting part **280** may correspond to a cross-sectional shape of the second space **180.** A ring-shaped sealing member (not shown) for sealing the second space **180** may be disposed on an outer peripheral surface of the mounting part **280.** The sealing member may be formed of a rubber material to prevent fluid from leaking between the outer peripheral surface of the mounting part **280** and the inner peripheral surface of the second space **180.**

A third opening **232** through which the fluid is being sucked and a fourth opening **234** through which the fluid that has been sucked is discharged may be formed on an upper surface of the second cover **200.** The fluid may be oil. Each of the third opening **232** and the fourth opening **234** may be formed to have an arc shape, and may be provided such that the gap becomes gradually narrower as it travels from one side to the other. More specifically, it may be disposed in a way that the wide side of the gap of the third opening **232** faces the wide side of the gap of the fourth opening **234,** and the narrow side of the gap of the third opening **232** faces the narrow side of the gap of the fourth opening.

In a present embodiment, the cross-sectional area of the third opening **232** is formed to be larger than that of the fourth opening **234** as an example, but the cross-sectional area of the fourth opening **234** may be formed to be larger than that of the third opening **232.**

The third opening **232** and the fourth opening **234** may be disposed on an upper surface of the mounting part **280.**

A protruded portion **220** being protruded upward may be disposed on an upper surface of the second cover **200.** The protruded portion **220** may be disposed in the center of the mounting part **280.** The protruded portion **220** may be coupled to a hole **132** inside the internal gear **130** to be described later to support the internal gear **130.**

A first space **110** may be formed on an upper surface of the housing **100.** The first space **110** may have a groove shape. A plurality of electronic components for driving may be disposed in the first space **110.** For example, in the first space **110,** a circuit board **190** and a terminal **111** may be disposed. A plurality of devices may be mounted on the circuit board **190.** A connector **199** may be disposed on a side surface of the housing **100.** The connector **199** may be electrically connected to the circuit board **190.** An external terminal may be coupled to the connector **199.** For this reason, power may be applied to the pump **10** or a signal for driving may be transmitted or received.

In a bottom surface of the first space **110,** a fifth groove **112** that is formed by being more recessed compared to other regions may be included. A cross-sectional shape of the fifth groove **112** may be disposed to correspond to a cross-sectional shape of the circuit board **190.** Due to this, the circuit board **190** may be firmly fixed on the fifth groove **112.**

A sixth groove **114** that is formed by being more recessed compared to other regions may be disposed on the bottom surface of the fifth groove **112.** A portion of the lower surface of the circuit board **190** may be disposed to be spaced apart from the bottom surface of the sixth groove **114** due to the sixth groove **114.**

The first cover **300** may be coupled to an upper portion of the housing **100** so as to cover the first space **110.** A plurality of heat dissipation fins **310** being protruded upward may be disposed on an upper surface of the first cover **300.** The cross-sectional area of the first cover **300** may be increased through the heat dissipation fins **310.** Accordingly, heat generated in the first space **110** may be dissipated.

A stator **120** and a pump gear **150** may be disposed in the housing **100.** The pump gear **150** may include an external gear **140** and an internal gear **130.** The internal gear **130** may be disposed inside the external gear **140.** The housing **100** may be formed of a resin or plastic material.

The housing **100** may include a first partition wall **170** that divides the first region **100a** from the second region **100b,** and a body **105.** The first region **100a** may include a first space **110.** The second region may include a second space **180** defined by the first partition wall **170** and the body **105.** The first space **110** and the second space **180** may not be connected by the first partition wall **170.**

The stator **120** may be disposed inside the housing **100.** The stator **120** may be inserted into the body **105.** At least a portion of the body **105** may be disposed between the stator **120** and the pump gear **150.**

The stator **120** may be integrally formed with the housing **100** by double injection. The stator **120** and the housing **100** may be integrally formed by insert injection. The stator **120** may be molded inside the body **105** and accommodated inside the housing **100.** A stator accommodating space **108** in which the stator **120** is being disposed may be formed inside the housing **100.** The stator accommodating space **108** may be disposed outside the second space **180.** The outer surface of the stator **120** may be surrounded by the housing **100.**

The stator **120** may include a core and a coil **126** being wound around the core. The stator **120** may include an insulator **122** being disposed to surround the outer surface of the core. The coil **126** may be wound on an outer surface of the insulator **122.** The terminal **111** may be disposed on the first space **110** so as to be coupled to the circuit board **190** and the coil **126.** Accordingly, at least a portion of the insulator **122** may be exposed to the outside of the body. In addition, the stator **120** may be molded in the body **105** so as not to be exposed to the outside of the body **105.**

The second space **180** may be disposed in a central region of the housing **100.** The second space **180** may have a groove shape in which a portion of a lower surface of the housing **100** is being recessed upward. The arrangement region of the stator **120** and the second space **180** may be partitioned by a second partition wall **181.** In other words, the second partition wall **181** may be disposed between the core and the external gear **140** to be described later. The second partition wall **181** may be formed to a thickness of 0.2 mm to 1 mm.

The second space **180** and the first space **110** may be partitioned in up and down directions by the first partition wall **170.** A lower surface of the first partition wall **170** may form an upper surface of the second space **180.** The second space **180** and the first space **110** may be partitioned into different regions through the first partition wall **170.** Accordingly, it is possible to prevent the fluid inside the second space **180** from flowing into the first space **110** in advance.

The external gear **140** and the internal gear **130** may be disposed in the second space **180.**

The external gear **140** may be disposed inside the stator **120.** The second partition wall 181 may be disposed between the external gear **140** and the stator **120.**

The external gear **140** may include a core **141** and a magnet **144** being mounted on the core **141.** The magnet **144** may be disposed on an outer peripheral surface of the core **141** to correspond to the coil **126.** The external gear **140** may be a surface permanent magnet (SPM) type in which the magnet **144** is attached to the outer peripheral surface of the core **141.** To this end, a groove in which the magnet **144** is mounted may be formed in an outer peripheral surface of the core **141.** The groove may be provided in plurality, and may be disposed to be spaced apart from each other in a circumferential direction.

Accordingly, when a current is applied to the coil **126** of the stator **120,** the external gear **140** may be rotated by electromagnetic interaction between the stator **120** and the external gear **140.**

In the center of the external gear **140,** a first hole **142** in which the internal gear **130** is disposed may be formed. A plurality of ridges being protruded inward from the inner peripheral surface and valleys disposed between the plurality of ridges may be formed on an inner peripheral surface of the first hole **142.** That is, a first gear in which a plurality of peaks and valleys are alternately disposed may be formed on an inner peripheral surface of the first hole **142.**

The internal gear **130** may be disposed inside the external gear **140.** The external gear **140** may be called an external rotor, and the internal gear **130** may be called an internal rotor. The internal gear **130** and the external gear **140** may be disposed so that the centers do not coincide with each other.

The outer peripheral surface of the internal gear **130** may include a plurality of ridges **136** being protruded outward from the outer peripheral surface and valleys **134** disposed between the plurality of ridges **136.** A second gear in which a plurality of ridges **136** and a plurality of valleys **133** are alternately disposed may be formed on an outer peripheral surface of the internal gear **130.**

In other words, in the internal gear **130,** the second lobe **136** having N number of gear teeth may be disposed along the circumferential direction outward in the radial direction with respect to the rotation center. The external gear **140** may be provided with N+1 number of the first lobes **149** inward in the radial direction. The first lobe **149** may be disposed to be caught by the second lobe **136.** When the external gear **140** is rotated, the internal gear **130** may be rotated by the first lobe **149** and the second lobe **136.** According to the rotation of the internal gear **130,** the fluid may be introduced into the second space **180** or the fluid in the second space **180** may be discharged to the outside.

In summary, by the eccentricity of the external gear **140** and the internal gear **130,** a volume capable of transporting the fluid fuel is generated between the external gear **140** and the internal gear **130** so that the portion with the increased volume sucks the surrounding fluid due to pressure drop, and the portion with the reduced volume discharges the fluid due to the increase in pressure.

Meanwhile, on the upper surface of the second space **180,** that is, the lower surface of the first partition wall **170,** a guide **186** being protruded downward may be formed. The guide **186** may be formed in a ring shape so that an inner peripheral surface thereof may face an outer peripheral surface of the external gear **140.** The cross-sectional shape of the inner peripheral surface of the guide **186** may be formed to correspond to the cross-sectional shape of the outer peripheral surface of the external gear **140.** Accordingly, the external gear **140** may be rotated by being guided by an inner peripheral surface of the external gear **140.**

Unlike this, on an upper portion of the external gear **140,** a guide portion (not shown) may be formed to be stepped more upward than other regions, and disposed inside the guide **186.** In this case, the guide part may have a smaller cross-sectional area than other regions of the external gear **140.**

The height of the guide **186** being protruded from the lower surface of the first partition wall **170** may be formed to be smaller than one half of the height of the second space **180.**

On the upper surface of the second space **180** and the lower surface of the first partition wall **170,** a first protrusion **184** being protruded downward in a direction toward the pump gear **150** may be formed. In addition, a first groove **132** may be formed in the pump **150** so that the first protrusion **184** is coupled thereto. More specifically, the first groove **132** may be formed in the center of the internal gear **130** to penetrate through the lower surface from the upper surface. The first protrusion **184** may be coupled to the first groove **132.** That is, the first protrusion **184** may form a rotation center of the internal gear **130.** Accordingly, the first protrusion **184** supports the rotation of the internal gear **130** inside the second space **180.**

The height of the first protrusion **184** being protruded from the lower surface of the first partition wall **170** may be formed to be smaller than one half of the height of the second space **180.**

A third groove **188** and a fourth groove **189** may be formed on a lower surface of the first partition wall **170.** Each of the third groove **188** and the fourth groove **189** may have a groove shape that is recessed more upward than other region or a lower surface of the first partition wall **170.** The third groove **188** may be in the shape being overlapped with the first opening **212** or the third opening **232** in up and down directions. The fourth groove **189** may be in the shape being overlapped with the second opening **214** or the fourth opening **234.** That is, the cross-sectional shape of the third groove **188** corresponds to the cross-sectional shape of the first opening **212** or the third opening **232,** and the cross-sectional shape of the fourth groove **189** may be formed to correspond to the cross-sectional shape of the second opening **214** or the fourth opening **234.** Accordingly, the hydraulic pressure balance of the fluid in the second space **180** can be maintained.

The first protrusion **184** may be disposed between the third groove **188** and the fourth groove **189.**

According to the structure as described above, since the rotation shaft for transmitting the rotational force of the motor region to the pump region in the pump according to the conventional structure becomes unnecessary, there is an advantage in that the number of parts is reduced, and due to this, there is an advantage in that the manufacturing cost can be lowered.

In addition, in the conventional structure in which the motor region and the pump region are partitioned in up and down directions, since the length in up and down directions is formed to be short by removing the rotation shaft, there is an advantage in that the product can be miniaturized.

In addition, since the space in which the fluid is accommodated with other regions is divided through a partition wall, there is an advantage in that the leaking of the fluid to other regions can be prevented. In particular, there is an advantage that the stator can be protected from fluid by embedding the stator inside the housing.

In addition, there is an advantage in that noise can be reduced by disposing the external and internal gears, which are the main causes of noise, in the innermost space of the housing.

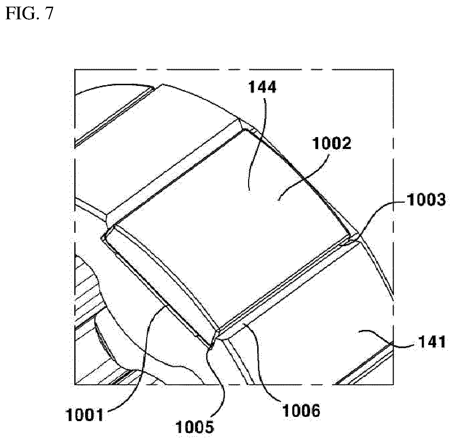

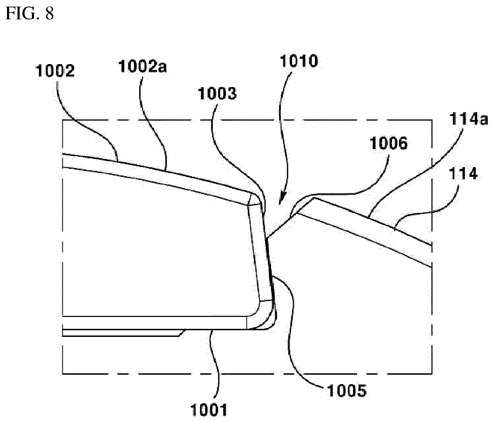

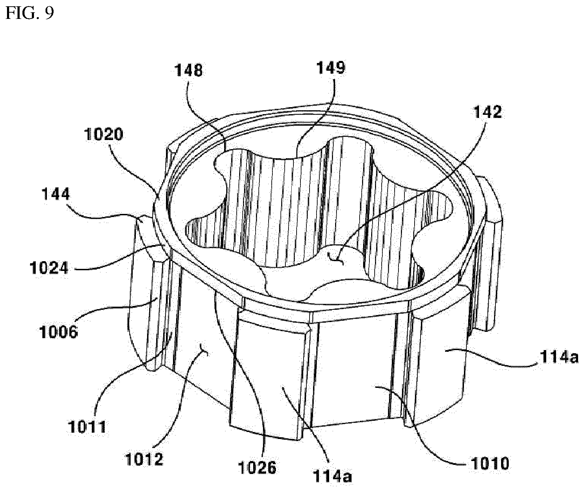

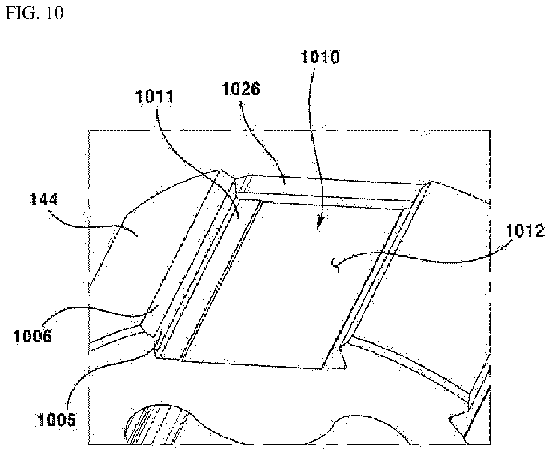

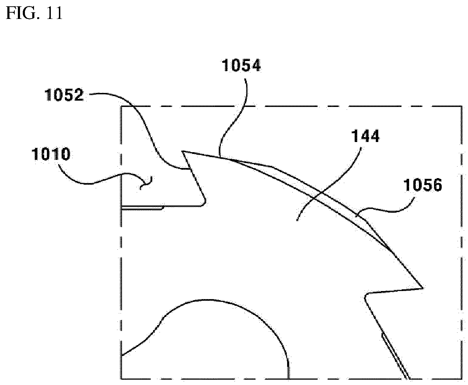

FIG. 7 is a perspective view illustrating a state in which a magnet is coupled to a core according to an embodiment of the present invention; FIG. 8 is a cross-sectional view illustrating a part of FIG. 7; FIG. 9 is a perspective view of a core according to an embodiment of the present invention; FIG. 10 is an enlarged perspective view of a groove in which a magnet inside a core according to an embodiment of the present invention is being coupled; and FIG. 11 is a modified embodiment of a core according to an embodiment of the present invention.

Referring to FIGS. 7 to 10, as described above, the external gear **140** may include a core **141** and a magnet **144** disposed on an outer surface of the core **141.** On an outer surface of the core **141,** an accommodating groove **1010** may be formed to be more recessed than other regions so that the magnet **144** is coupled thereto.

The magnet **144** may include: an inner surface **1001** facing the bottom surface **1011** of the accommodating groove **1010;** an outer surface **1002** facing the inner surface **1001** and exposed to the outside; and a side surface **1003** connecting the inner surface **1001** and the outer surface **1002.**

The magnet **144** may have a cross-sectional area of the inner surface **1001** larger than that of the outer surface **1002.** For this reason, a first inclined surface may be formed on a side surface **1003** so that the length in the circumferential direction of the magnet **144** becomes shorter as it travels toward the outside.

In other words, the magnet **144** may include a first outer peripheral surface **1002a,** and the external gear **140** may include a second outer peripheral surface **144a.** In this case, the curvature of the first outer peripheral surface **1002a** may be smaller than the curvature of the second outer peripheral surface **144a.** The accommodating groove **1010** may be disposed between a plurality of adjacent second outer peripheral surfaces **144a.**

In addition, the magnet **144** may include a plurality of unit magnets. The plurality of unit magnets may be disposed to be spaced apart from each other along a circumferential direction of the external gear **140.** The second outer peripheral surface **144a** may be disposed between two adjacent unit magnets among the plurality of unit magnets.

Meanwhile, the accommodating groove **1010** may include a bottom surface **1011** facing the inner surface **1001** and an inner peripheral surface facing the side surface **1003.** The inner peripheral surface may include a first inner peripheral surface **1005** in contact with the side surface **1003** and a second inner peripheral surface **1006** spaced apart from the side surface **1003.** A second inclined surface may be formed on the first inner peripheral surface **1005** to correspond to the first inclined surface of the side surface **1003.**

In other words, the accommodating groove **1010** may include a bottom surface **1011** and side surfaces **1005** and **1006** connected to the bottom surface **1011.** In this case, the side surfaces **1005** and **1006** may include a first region **1005** inclined at a first angle and a second region **1006** inclined at a second angle.

Here, the first region **1005** may be in contact with a side surface of the magnet **1002.** And, the second region **1006** may not be in contact with a side surface of the magnet **1002.**

In addition, a third inclined surface may be formed on the second peripheral surface **1006** so that the distance from the side surface of the magnet **144** increases as it travels toward the outside. Accordingly, the second peripheral surface **1006** may be spaced apart from the side surface of the magnet **144** as described above. The third inclined surface may be inclined with respect to the second inclined surface. The third inclined surface and the second inclined surface may have an obtuse angle.

Meanwhile, the size of the inner surface of the magnet **144** facing the accommodating groove **1010** may be smaller than the size of the first outer peripheral surface **1002.**

Unlike this, as illustrated in FIG. 11, the second inclined surface **1052** may have an acute angle with the third inclined surface **1054.** In this case, the side surface **1056** of the core **144** may be formed to be smaller, so that the friction force with the peripheral surface of the second space **180** may be further reduced. In summary, the side surface of the magnet **144** may form an acute angle with the inner surface of the magnet **144.**

Therefore, according to the above-described structure, by forming a first inclined surface on a side surface of the magnet **144** and the first peripheral surface, the separation of the magnet **144** from the accommodating groove **1010** can be prevented. In addition, since the outer cross-sectional area of the core **141** can be formed to be relatively small due to the structure of the first inclined surface of the second peripheral surface **1006,** there is an advantage that can reduce friction caused by the rotation of the external gear **140.**

Referring to FIGS. 9 and 10, an adhesive accommodating groove **1012** being recessed more inward than other regions may be formed on a bottom surface of the accommodating groove **1010.** The bottom surface of the adhesive accommodating groove **1012** may be disposed to be stepped with the bottom surface **1011.** An adhesive may be accommodated in the adhesive accommodating groove **1012.** Accordingly, the magnet **144** may be firmly fixed in the accommodating groove **1010.**

In addition, a step **1026** being protruded outward may be disposed on an upper end of the outer peripheral surface of the core **141.** The step **1026** may be protruded more outward than other regions, so that a lower surface thereof may be in contact with an upper surface of the magnet **144.** Accordingly, the magnet **144** may be slid upward from a lower portion of the accommodating groove **1010** to be coupled inside the accommodating groove **1010.**

The step **1026** may be disposed at the lower end of the core **141.**

A side surface of the step **1026** may be disposed to be protruded more outward than a bottom surface of the accommodating groove **1010.**

A side surface of the step **1026** may include a straight portion and a curved portion. The straight portion and the curved portion may be alternately disposed along a circumferential direction of the core **141.** The straight portion may be disposed in a region being overlapped with the accommodating groove **1010** in up and down directions, and the curved portion may be disposed in other region.

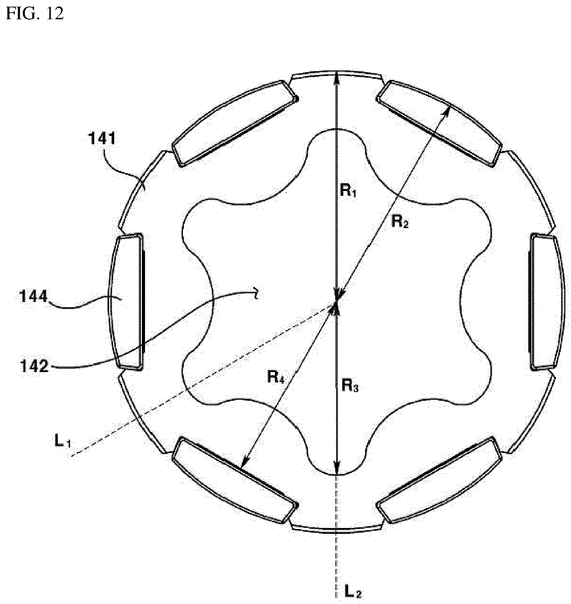

FIG. 12 is a plan view illustrating an upper surface or a lower surface of an external gear according to an embodiment of the present invention.

Referring to FIG. 12, a convex surface may be formed on an outer surface of the magnet **144,** and a flat surface may be formed on an inner surface of the magnet **144** to correspond to the bottom surface of the accommodating groove **1010.**

The distance **R2** from the center of the core **141** to the outer surface of the magnet **144** may be formed to be smaller than the distance **R1** from the center of the core **141** to the outer surface of the core **141.** That is, in the external gear **140,** the outer surface of the core **141** may be disposed more outside than the outer surface of the magnet **144.**

In other words, with respect to the radial direction of the external gear **140,** the linear distance from the center of the external gear **140** to the second outer peripheral surface **114a** may be larger than the maximum linear distance from the center of the external gear **140** to the first outer peripheral surface **1002a.**

And, the distance **R4** from the center of the core **141** to the inner surface of the magnet **144** may be formed longer than the distance **R3** from the center of the core **141** to the inner surface of the lobe **149.** Accordingly, the rotational efficiency of the external gear **140** according to the magnetic flux of the magnet **144** may be enhanced.

The peripheral surface of the external gear **140** may include a concave portion **148** and a convex portion **149.** The concave portion **148** and the convex portion **149** may be alternately disposed along the circumferential direction on the peripheral surface of the external gear **140.** The convex portion **149** may be disposed closer to the center of the external gear **140** than the concave portion **148.**

Meanwhile, the magnet **144** may be disposed in a region being overlapped with the convex portion **149** in a radial direction. Accordingly, the concave portion **149** may be disposed to be overlapped with a region between the adjacent magnets **144** in a radial direction. That is, the second outer peripheral surface **114a** may be disposed to be overlapped with the concave portion **148** in a radial direction.

That is, the imaginary lines **L1** and **L2** connecting the center of the core **141** and the region dividing the concave portion **149** in half in the circumferential direction may be disposed so as to pass through the region dividing between the adjacent magnets **144** in half in the circumferential direction.

And, the shortest distance from the center of the external gear **140** to the magnet **144** may be greater than the maximum distance from the center of the external gear **140** to the bottom surface of the concave portion **148** in a radial direction.

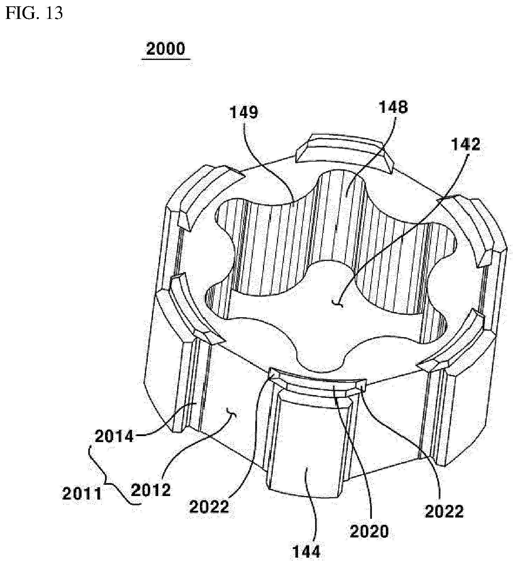

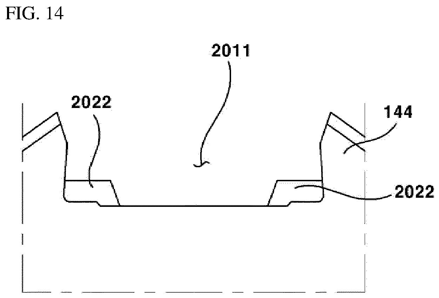

FIG. 13 is a perspective view of a core according to a second embodiment of the present invention; and FIG. 14 is a plan view illustrating a lower surface of a groove according to a second embodiment of the present invention.

In the present embodiment, other parts are the same as in the first embodiment, except that there is a difference in the shape of the step. Accordingly, only the characteristic parts of the present embodiment will be described below, and the first embodiment will be referred to for the remaining parts.

Referring to FIGS. 13 and 14, in a core **2000** according to the present embodiment, a plurality of side portions **2030** and grooves **2011** may be alternately disposed on an outer peripheral surface. A magnet may be coupled to the groove **2011.** The groove **2011** may include a bottom surface **2014** and an adhesive accommodating groove **2012.**

On an upper end of the core **2000,** a step **2020** being protruded outward may be disposed. The step **2020** may be disposed to be overlapped with a side portion **2030** in up and down directions. The length of the step **2020** in a circumferential direction may be longer than the length of the side portion **2030** in the circumferential direction. Accordingly, both ends **2022** of the step **2020** may be protruded outward of the side portion **2030.** Both ends **2022** of the step **2020** may be disposed to be overlapped with at least a portion of the groove **2011** in up and down directions.

Accordingly, when the magnet is coupled inside the groove **2011,** the upper surface of the magnet may be supported by the lower surface of the step **2020.**

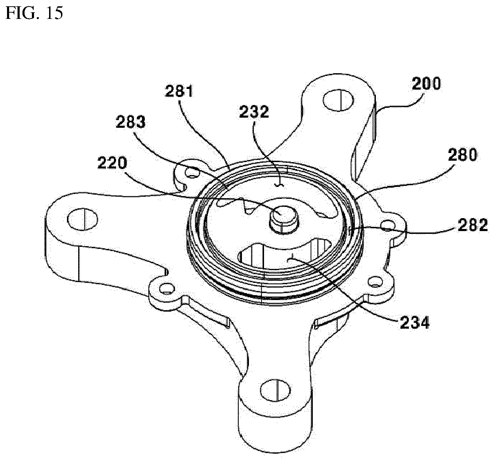

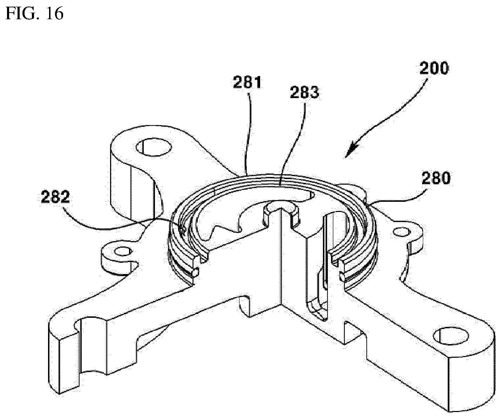

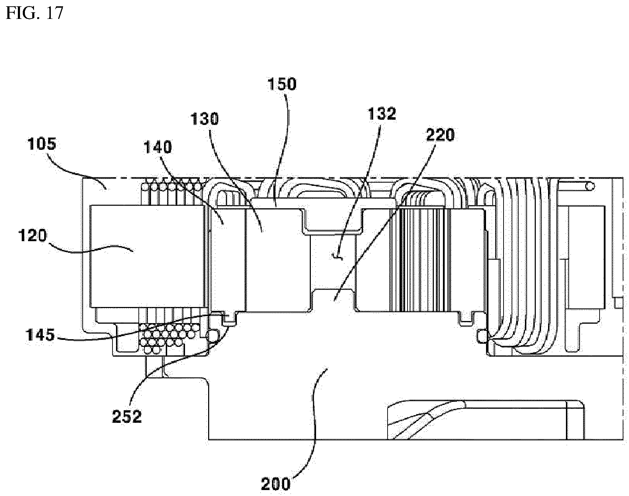

FIG. 15 is a perspective view of a second cover according to an embodiment of the present invention; FIG. 16 is a perspective view illustrating a second cover according to an embodiment of the present invention in which a portion thereof is cut open; and FIG. 17 is a cross-sectional view illustrating a coupling state of a second cover and a pump gear according to an embodiment of the present invention.

Referring to FIGS. 15 to 17, the pump gear **150** may include a first guide part **145** being protruded toward the second cover **200.** The first guide part **145** may be disposed in the external gear **140** among the pump gear **150.** The first guide part **145** may be formed to be protruded downward from the lower surface of the external gear **140.** The first guide part **145** may be formed in a ring shape including one surface having a constant curvature.

The height of the first guide part **145** may be 20% to 50% of the height of the external gear **140.**

In addition, a guide groove **282** may be disposed in the second cover **200** in a way that the first guide part **145** is inserted thereto. The guide groove **282** may be disposed between the inner portion **283** and the outer portion **281.** One surface of the guide groove **282** facing the side surface of the first guide part **145** may be in contact with each other. That is, a peripheral surface of the first guide part **145** and a peripheral surface of the guide groove **282** may be in contact.

Referring to FIGS. 6 and 15 to 17, the inner diameter of the first guide part **145** is greater than the maximum distance from the center of the external gear **140** to the peripheral surface of the first hole **142,** and may be smaller than the shortest distance from the center of the external gear **140** to the magnet **144.**

In addition, the first guide part **145** may include a first thickness of a region being overlapped with the magnet **144** in a radial direction and a second thickness of a region not being overlapped with the magnet **144** in a radial direction. At this time, the first thickness may be smaller than the second thickness.

Meanwhile, the first guide part **145** may not be overlapped with the magnet **144** in a radial direction and a direction perpendicular to the radial direction.

According to the structure as described above, there is an advantage that the pump gear **150** can be firmly fixed inside the second space **180.**

The terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined.

## Claims

1. A pump (10) comprising:
a housing (100) including a body (105) and a first partition wall (170) which separates first and second areas (100a, 100b);
a stator (120) disposed in the housing (100);
a circuit board (190) disposed in the first area (100a);
a pump gear (150) disposed in the second area (100b); and
magnets (144) disposed on the pump gear (150),
wherein the stator (120) includes a core, an insulator (122) coupled to the core, and a coil (126) wound on the insulator,
wherein the second area (100b) includes a second space (180) defined by the first partition wall (170) and the body (105),
wherein the stator (120) is molded inside the body (105) and not exposed to the outside of the body (105),
wherein the pump gear (150) includes an external gear (140) and an internal gear (130) disposed inside the external gear (140),
**characterized in that** the first partition wall (170) includes a first protrusion (184) protruded in a direction facing the pump gear (150),
wherein the pump gear (150) include a first groove (132) in which the first protrusion (184) is disposed,
wherein the first protrusion (184) forms a rotation center of the internal gear(130), and
wherein a height of the first protrusion (184) protruded from a lower surface of the first partition wall (170) is smaller than one half of a height of the second space (180).

2. The pump according to claim 1,
wherein the first area (100a) includes a first space (110), and
wherein the first area (100a) and the second space (180) is not connected by the first partition wall (170).

3. The pump according to claim 1,
wherein at least a portion of the body (105) is disposed between the stator (120) and the pump gear (150).

4. The pump according to claim 1,
wherein the magnet (144) is disposed on an outer peripheral surface of the pump gear (150) to correspond to the coil (126).

5. The pump according to claim 1,
wherein the housing (100) includes a terminal (111), and
wherein the terminal (111) is connected to the coil (126) and the circuit board (190).

6. The pump according to claim 1, including:
a first cover (300) disposed above the first area (100a) and a second cover (200) disposed below the second area (100b),
wherein a first opening (212) and a second opening (214) having a predetermined shape are formed on one surface of the second cover (200),
wherein a third opening (232) connected to the first opening (212) and a fourth opening (234) connected to the second opening (214) are formed on the other surface of the second cover (200), and
wherein a third groove (188) corresponding to the shape of the first opening (212) and a fourth groove (189) corresponding to the shape of the second opening (214) are included on one surface of the first partition wall (170).

## Patentansprüche

1. Pumpe (10), umfassend:
ein Gehäuse (100), das einen Körper (105) und eine erste Trennwand (170) einschließt, die einen ersten und einen zweiten Bereich (100a, 100b) trennt;
einen Stator (120), der in dem Gehäuse (100) angeordnet ist;
eine Leiterplatte (190), die in dem ersten Bereich (100a) angeordnet ist;
ein Pumpenzahnrad (150), das in dem zweiten Bereich (100b) angeordnet ist; und Magnete (144), die auf dem Pumpenzahnrad (150) angeordnet sind,
wobei der Stator (120) einen Kern, einen mit dem Kern gekoppelten Isolator (122) und
eine auf dem Isolator aufgewickelte Spule (126) einschließt,
wobei der zweite Bereich (100b) einen zweiten Raum (180) einschließt, der durch die erste Trennwand (170) und den Körper (105) definiert ist,
wobei der Stator (120) innerhalb des Körpers (105) geformt ist und nicht der Außenseite des Körpers (105) ausgesetzt ist,
wobei das Pumpenzahnrad (150) ein Außenzahnrad (140) und ein Innenzahnrad (130) einschließt, die innerhalb des Außenzahnrads (140) angeordnet sind,
**dadurch gekennzeichnet, dass** die erste Trennwand (170) einen ersten Vorsprung (184) einschließt, der in eine dem Pumpenzahnrad (150) zugewandte Richtung vorsteht,
wobei das Pumpenzahnrad (150) eine erste Nut (132) einschließt, in der der erste Vorsprung (184) angeordnet ist,
wobei der erste Vorsprung (184) ein Drehzentrum des Innenzahnrads (130) bildet, und wobei eine Höhe des ersten Vorsprungs (184), der aus einer unteren Oberfläche der ersten Trennwand (170) herausragt, kleiner als die Hälfte einer Höhe des zweiten Raums (180) ist.

2. Pumpe nach Anspruch 1,
wobei der erste Bereich (100a) einen ersten Raum (110) einschließt, und
wobei der erste Bereich (100a) und der zweite Raum (180) nicht durch die erste Trennwand (170) verbunden sind.

3. Pumpe nach Anspruch 1,
wobei mindestens ein Abschnitt des Körpers (105) zwischen dem Stator (120) und dem Pumpenzahnrad (150) angeordnet ist.

4. Pumpe nach Anspruch 1,
wobei der Magnet (144) auf einer äußeren Peripheriefläche des Pumpenzahnrades (150) angeordnet ist, um der Spule (126) zu entsprechen.

5. Pumpe nach Anspruch 1,
wobei das Gehäuse (100) einen Anschluss (111) einschließt, und
wobei der Anschluss (111) mit der Spule (126) und der Leiterplatte (190) verbunden ist.

6. Pumpe nach Anspruch 1, einschließlich:
einer ersten Abdeckung (300), die über dem ersten Bereich (100a) angeordnet ist, und einer zweiten Abdeckung (200), die unter dem zweiten Bereich (100b) angeordnet ist, wobei eine erste Öffnung (212) und eine zweite Öffnung (214) mit einer vorbestimmten Form an einer Oberfläche der zweiten Abdeckung (200) ausgebildet sind,
wobei eine dritte Öffnung (232), die mit der ersten Öffnung (212) verbunden ist, und eine vierte Öffnung (234), die mit der zweiten Öffnung (214) verbunden ist, an der anderen Oberfläche der zweiten Abdeckung (200) ausgebildet sind, und
wobei eine dritte Nut (188), die der Form der ersten Öffnung (212) entspricht, und eine vierte Nut (189), die der Form der zweiten Öffnung (214) entspricht, auf einer Oberfläche der ersten Trennwand (170) enthalten sind.

## Revendications

1. Pompe (10) comprenant :
un boîtier (100) incluant un corps (105) et une première paroi de séparation (170) qui sépare des première et seconde zones (100a, 100b) ;
un stator (120) disposé dans le boîtier (100) ;
une carte de circuit imprimé (190) disposée dans la première zone (100a) ;
un engrenage de pompe (150) disposé dans la seconde zone (100b) ; et
des aimants (144) disposés sur l'engrenage de pompe (150),
dans laquelle le stator (120) inclut un noyau, un isolant (122) couplé au noyau, et une bobine (126) enroulée sur l'isolant,
dans laquelle la seconde zone (100b) inclut un second espace (180) défini par la première paroi de séparation (170) et le corps (105),
dans laquelle le stator (120) est moulé à l'intérieur du corps (105) et n'est pas exposé à l'extérieur du corps (105),
dans laquelle l'engrenage de pompe (150) inclut un engrenage externe (140) et un engrenage interne (130) disposé à l'intérieur de l'engrenage externe (140),
**caractérisée en ce que** la première paroi de séparation (170) inclut une première saillie (184) faisant saillie dans une direction orientée vers l'engrenage de pompe (150), dans laquelle l'engrenage de pompe (150) inclut une première rainure (132) dans laquelle la première saillie (184) est disposée,
dans laquelle la première saillie (184) forme un centre de rotation de l'engrenage interne (130), et
dans laquelle une hauteur de la première saillie (184) faisant saillie à partir d'une surface inférieure de la première paroi de séparation (170) est inférieure à la moitié d'une hauteur du second espace (180).

2. Pompe selon la revendication 1,
dans laquelle la première zone (100a) inclut un premier espace (110), et
dans laquelle la première zone (100a) et le second espace (180) ne sont pas reliés par la première paroi de séparation (170).

3. Pompe selon la revendication 1,
dans laquelle au moins une partie du corps (105) est disposée entre le stator (120) et l'engrenage de pompe (150).

4. Pompe selon la revendication 1,
dans laquelle l'aimant (144) est disposé sur une surface périphérique externe de l'engrenage de pompe (150) pour correspondre à la bobine (126).

5. Pompe selon la revendication 1,
dans laquelle le boîtier (100) inclut une borne (111), et
dans laquelle la borne (111) est reliée à la bobine (126) et à la carte de circuit imprimé (190).

6. Pompe selon la revendication 1, incluant :
un premier capot (300) disposé au-dessus de la première zone (100a) et un second capot (200) disposé en dessous de la seconde zone (100b),
dans laquelle une première ouverture (212) et une deuxième ouverture (214) ayant une forme prédéterminée sont formées sur une surface du second capot (200),
dans laquelle une troisième ouverture (232) reliée à la première ouverture (212) et une quatrième ouverture (234) reliée à la deuxième ouverture (214) sont formées sur l'autre surface du second capot (200), et
dans laquelle une troisième rainure (188) correspondant à la forme de la première ouverture (212) et une quatrième rainure (189) correspondant à la forme de la deuxième ouverture (214) sont incluses sur une surface de la première paroi de séparation (170).
